# EUROPÄISCHE PATENTSCHRIFT

(11) **EP 3 113 659 B1**
(45) Veröffentlichungstag und Bekanntmachung des Hinweises auf die Patenterteilung: **04.07.2018**
(21) Anmeldenummer: 15710130.4
(22) Anmeldetag: 04.03.2015
(51) Int. Cl.: A47J 31/18

(54) **GEFÄSS ZUR ZUBEREITUNG VON AUFGUSSGETRÄNKEN**
VESSEL FOR THE PREPARATION OF INFUSION BEVERAGES
RÉCIPIENT POUR LA PRÉPARATION DE BOISSONS INFUSÉES

(30) Priorität: 07.03.2014 DE 202014002154 U
(43) Veröffentlichungstag der Anmeldung: 11.01.2017
(73) Patentinhaber: EM-2 GmbH, 99848 Wutha-Farnroda (DE)
(72) Erfinder: HORNUNG, René, 99817 Eisenach (DE); WOLF, Jens, 99958 Tonna (DE)
(74) Vertreter: Kruspig, Volkmar
(86) Internationale Anmeldenummer: PCT/EP2015/054477
(87) Internationale Veröffentlichungsnummer: WO 2015/132289

(56) Entgegenhaltungen:
- DE-A1- 10 108 429
- DE-U- 1 637 164

## Beschreibung

Die Erfindung betrifft ein Gefäß zur Zubereitung von Aufgussgetränken mit Rückhaltevolumen für nichtlösliche Aufgussbestandteile, bestehend aus einem Gefäßkörper mit einem als schiefe Ebene ausgebildeten Boden, welche am Fußpunkt in das Rückhaltevolumen übergeht, gemäß Oberbegriff des Anspruchs 1.

Aus dem deutschen Gebrauchsmuster DE 1 637 164 U1 ist ein Gefäß in Form einer Kaffeetasse vorbekannt, in welchem Kaffee oder Tee ohne Filter gebrüht werden kann. Das dortige Gefäß besteht im unteren Teil aus einem Hohlraum, in dem sich Kaffeesatz oder Teeblätter absetzen können. Soweit der figürlichen Darstellung entnehmbar ist, weist der Boden des vorbekannten Gefäßes eine zum Gefäßinnenvolumen gerichtete Aufwölbung auf, die eine Begrenzung für einen im Schnitt kreisringförmigen Hohlraum zum Rückhalten nichtlöslicher Aufgussbestandteile bildet.

Bei einer praktischen Anwendung des vorbekannten Gefäßes besteht beim Trinkvorgang die Gefahr, dass trotz des Hohlraums nichtlösliche Bestandteile mitgerissen werden mit der Folge eines getrübten Trinkgenusses.

Aus dem Vorgenannten ist es daher Aufgabe der Erfindung, ein weiterentwickeltes Gefäß zur Zubereitung von Aufgussgetränken anzugeben, dessen Rückhaltevolumen für nichtlösliche Aufgussbestandteile derart weitergebildet ist, dass unter allen denkbaren Einsatzumständen die nicht gelösten Bestandteile, z.B. Teeblätter oder Kaffeesatz, sicher zurückgehalten werden. Darüber hinaus soll sich das Gefäß vom äußeren Erscheinungsbild an bekannten Kannen oder Trinkgefäßen anlehnen und seine speziellen funktionalen Eigenschaften gestalterisch verbergen. Letztendlich sind die Strömungsverhältnisse beim Entleeren des Gefäßes so zu realisieren, dass eine Vermischung der nichtlöslichen Bestandteile mit der Brüh- bzw. Trinkflüssigkeit ausgeschlossen, zumindest jedoch minimiert wird.

Die Lösung der Aufgabe der Erfindung erfolgt durch die Merkmalskombination nach Anspruch 1, wobei die Unteransprüche mindestens zweckmäßige Ausgestaltungen und Weiterbildungen darstellen.

Es wird demnach von einem Gefäß zur Zubereitung von Aufgussgetränken ausgegangen, welches ein Rückhaltevolumen für nichtlösliche Aufgussbestandteile enthält. Dieses Rückhaltevolumen ist integraler Bestandteil des Gefäßes. Das Gefäß selbst besteht aus einem Gefäßkörper, z.B. aus einem gebrannten Keramikmaterial, wobei der Gefäßkörper einen als schiefe Ebene ausgebildeten Boden umfasst, welcher am Fußpunkt in das Rückhaltevolumen übergeht. Dieser Boden des Gefäßkörpers stellt sich als innerer Boden dar, der von einem äußeren Boden umfasst sein kann, welcher eine wünschenswerte ebene Standfläche darstellt. Alternativ sind ausgehend von dem als schiefe Ebene ausgebildeten Boden Stützelemente vorsehbar, um das Gefäß sicher aufstellen zu können. Maßgeblich ist, dass im Zustand des Brühens die schiefe Ebene ihre Wirkung bezüglich des schwerkraftbedingten Bewegens nichtlöslicher Aufgussbestandteile erfüllt.

Erfindungsgemäß ist das Rückhaltevolumen als spezieller Reservoirraum ausgeführt.

Dieser Reservoirraum weist einen ebenen, unterhalb der schiefen Ebene verlaufenden Bodenabschnitt auf. Weiterhin sind ein zur schiefen Ebene gerichteter Verbindungsabschnitt und ein bauchiger, dem Verbindungsabschnitt gegenüberliegender, beim Ausgieß- oder Trinkvorgang wirksamer Rückhalteabschnitt vorhanden.

Insbesondere der Rückhalteabschnitt ist derart ausgebildet, dass der Aufguss-Flüssigkeitsspiegel gehindert ist, unter das Niveau der nichtlöslichen Aufgussbestandteile abzusinken. Damit wird ausgeschlossen, dass nichtlösliche Aufgussbestandteile mitgerissen werden.

Bei einer bevorzugten Ausgestaltung der Erfindung weist das Gefäß einen tüllenartigen Ausguss auf, welcher oberhalb des Reservoirraums am oberen Rand des Gefäßkörpers ausgebildet ist.

Zwischen dem Rückhalteabschnitt und dem Ausguss befindet sich erfindungsgemäß ein Rücksprung, der in ein Trichtersegment übergeht, um ein strömungsbedingtes Aufwirbeln von im Reservoirraum befindlichen Aufgussbestandteilen beim Vorgang des Ausgießens bzw. Trinkens zu unterdrücken.

In weiterer Ausgestaltung der Erfindung sind oberhalb des Reservoirraums kaskadenartige Vor- und Rücksprünge am Gefäßkörper vorgesehen. Diese kaskadenartigen Vor- und Rücksprünge bewirken ein ergänzendes Zurückhalten von nichtlöslichen Aufgussbestandteilen beim Vorgang des Trinkens oder Ausgießens.

Die Vor- und Rücksprünge können die gesamte Wandungsstruktur des Gefäßkörpers gestalten, jedoch alternativ auch nur an der Gefäßkörperinnenseite vorgesehen sein.

Bei einer Ausgestaltung dieser Vor- und Rücksprünge über die Gefäßkörperstruktur kann diese quasi Wellenform auch zum sicheren Halten des Trinkgefäßes Verwendung finden und insofern gefäßumfangsseitig ausgeführt werden.

Bei einer bevorzugten, jedoch nicht ausschließlichen Ausgestaltung des Gefäßes weist der Gefäßkörper eine zylindrische, teilzylindrische oder ovale Form auf.

Weiterhin bevorzugt ist die schiefe Ebene nicht nur über einen Teil des Gefäßbodens, sondern mit Ausnahme des Rückhaltevolumens den gesamten Gefäßboden ausfüllend realisiert. In diesem Fall kann die schiefe Ebene als Brühfläche beim Vorgang des Aufgießens genutzt werden.

Das erfindungsgemäße Gefäß kann sowohl als einfaches Trinkgefäß, Tasse mit oder ohne Henkel oder aber auch als klassische Kanne, in der der Aufguss zubereitet wird, ausgebildet sein.

Die Erfindung soll nachstehend anhand von Ausführungsbeispielen sowie unter Zuhilfenahme von Figuren näher erläutert werden.

Hierbei zeigen:
Die Fig. 1 bis 4 verschiedene Darstellungen eines ersten Ausführungsbeispiels eines Gefäßes, ausgebildet als Trinktasse, mit Fig. 1 als Vorderansicht-Schnittdarstellung des Gefäßes;
Fig. 2 eine seitliche Schnittdarstellung des beispielhaften Gefäßes gemäß erstem Ausführungsbeispiel;
Fig. 3 eine Ansicht von oben auf das Gefäß gemäß erstem Ausführungsbeispiel und
Fig. 4 eine Schnittdarstellung entlang der Linie A-A gemäß Fig. 2.

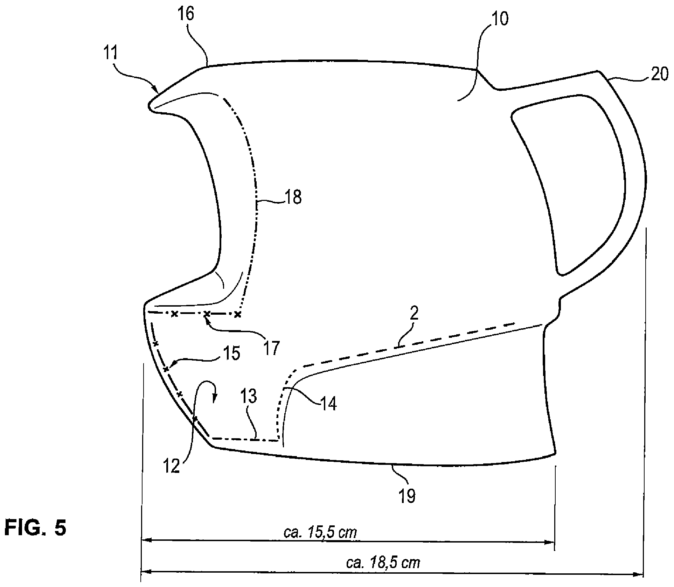

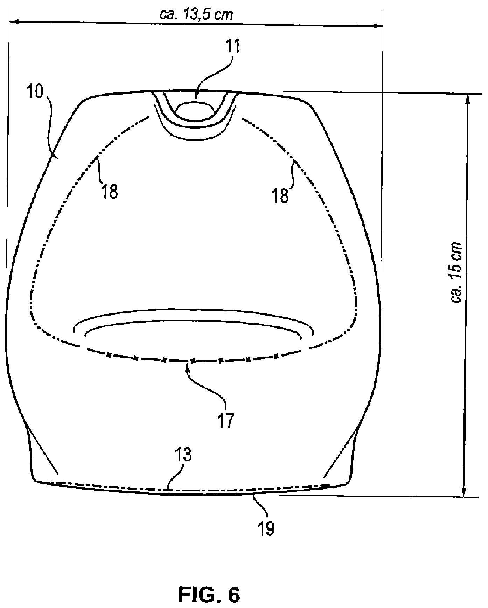

Mit den Fig. 5 und 6 wird ein weiteres Ausführungsbeispiel des erfindungsgemäßen Gefäßes in Form einer Brühkanne gezeigt.

Fig. 5 zeigt hier eine Seitenansicht der Kanne gemäß zweitem Ausführungsbeispiel und Fig. 6 eine Vorderansicht der Brühkanne, und zwar in Richtung auf den im oberen Bereich der figürlichen Darstellung erkennbaren tüllenartigen Ausguss.

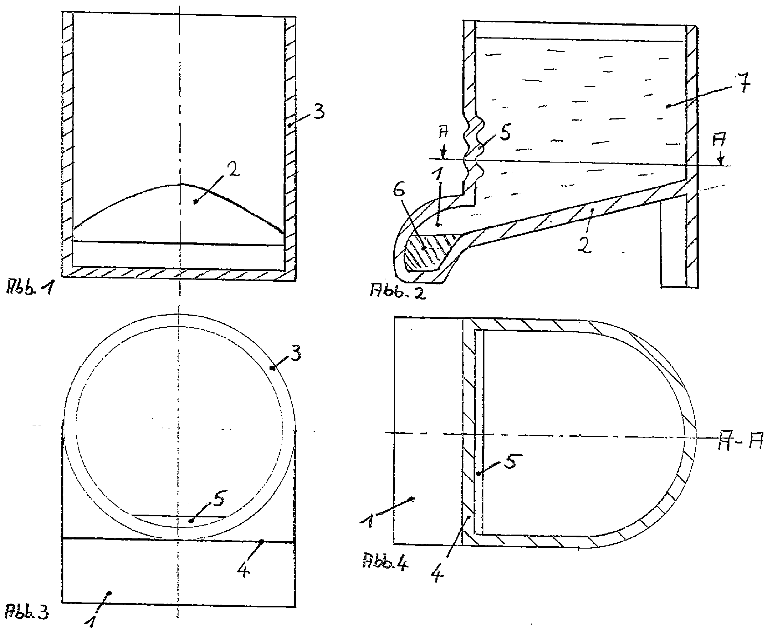

Gemäß den Darstellungen nach den Fig. 1 bis 4 umfasst das erste Ausführungsbeispiel eine Brüh-Trinktasse, z.B. in Form eines Kaffeebechers. Der Kaffeebecher besitzt ein Rückhaltevolumen 1, in dem sich Kaffeesatz 6 eines gebrühten Kaffees 7 absetzen kann. Diesbezüglich ist der Boden des Gefäßes als schiefe Ebene 2 realisiert. Weiterhin sind im vorderen Bereich des Gefäßes, oberhalb des Rückhaltevolumens 1, Verrippungen 5 in Form von Vor- und Rücksprüngen vorhanden. Ein Abflachungsabschnitt 4 stellt sicher, dass der Kaffee 7 über einen breiten, gleichmäßig dünnen Strom abfließt. Beim Blick in das Gefäß kann ein eventuell mitfließender restlicher Kaffeesatz als nichtlöslicher Aufgussbestandteil erkannt werden. Nachdem Kaffeepulver in das Gefäß gemäß erstem Ausführungsbeispiel eingebracht wurde, erfolgt der Brühvorgang. Im Anschluss setzt sich Kaffeesatz auf der schiefen Ebene 2 ab und gelangt schwerkraftbedingt in das Rückhaltevolumen bzw. den Rückhalteraum 1 und sammelt sich dort (Bezugszeichen 6).

Der nach vorn gerichtete bauchige Abschnitt mit Überwölbung bezogen auf das untere Ende der schiefen Ebene 2 bewirkt ein Rückhalten des Kaffeesatzes 3 und sichert außerdem, dass der Aufguss-Flüssigkeitsspiegel gehindert ist, unter das Niveau der nichtlöslichen Aufgussbestandteile 6 abzusinken.

Grundsätzlich kann das Rückhaltevolumen verschiedenartig gestaltet werden, solange die im Schutzanspruch 1 dargelegten Bedingungen erfüllt werden, d.h. ein sicheres Aufnehmen von nichtlöslichen Aufgussbestandteilen erfolgt und diese beim Vorgang des Ausgießens sicher zurückgehalten werden.

Gemäß dem zweiten Ausführungsbeispiel wird von einer Brühkanne 10 ausgegangen. Die Brühkanne 10 weist einen tüllenartigen Ausguss 11 auf und besteht aus einem Gefäßkörper, der einen Innenhohlraum umschließt.

In diesem Innenraum befindet sich ein Reservoirraum 12, der das Rückhaltevolumen 1 darstellt.

Die ebenfalls im Innenvolumen verlaufende schiefe Ebene 2 ist mit der gestrichelten Linie angedeutet.

Unterhalb der schiefen Ebene 2 umfasst der Reservoirraum 12 einen Bodenabschnitt 13, in der Fig. 5 strichpunktiert dargestellt.

Zwischen dem Bodenabschnitt 13 und der schiefen Ebene 12 verläuft ein Verbindungsabschnitt 14, dargestellt durch eine punktierte Linie.

Weiterhin ist ein bauchiger, dem Verbindungsabschnitt 14 gegenüberliegender, beim Ausgieß- oder Trinkvorgang wirksamer Rückhalteabschnitt 15 vorhanden, in der Fig. 5 durch eine Strich-Kreuz-Linie symbolisiert.

Der bereits erwähnte tülllenartige Ausguss 11 ist oberhalb des Reservoirraums 12 ausgebildet, und zwar im Bereich des oberen Randes 16.

Zwischen dem Rückhalteabschnitt 15 und dem Ausguss 11 befindet sich ein Rücksprung 17, symbolisiert durch eine Strich-Punkt-Kreuz-Linie.

Der Rücksprung 17 geht in ein Trichtersegment 18 über, welches sich aus der Gesamtschau der Darstellungen nach den Fig. 5 und 6 ergibt. Das Trichtersegment 18 ist durch eine Strich-Punkt-Punkt-Strich-Linie dargestellt.

Das Trichtersegment 18 bewirkt in Verbindung mit dem Rücksprung 17 und dem Rückhalteabschnitt 15 ein Unterdrücken eines strömungsbedingten Aufwirbelns von im Reservoirraum 12 befindlichen Aufgussbestandteilen.

Das kannenartige Brühgefäß 10 weist einen ebenen Außenboden 19 sowie einen an sich bekannten Henkel 20 auf. Die in den Fig. 5 und 6 angegebenen

Bemaßungen sind rein beispielhaft und stellen keine Einschränkung bezüglich einer möglichen Skalierung diesbezüglicher Größenabmessungen dar.

Obwohl beim Ausführungsbeispiel nach den Fig. 5 und 6 keine Verrippungen in Form von Vor- und Rücksprüngen 5, wie beim ersten Ausführungsbeispiel gezeigt, vorhanden sind, ist es selbstverständlich möglich, im diesbezüglichen Abschnitt 18, d.h. im Bereich des Trichtersegments 18, entsprechende Verrippungen auszubilden.

## Patentansprüche

1. Gefäß (10) zur Zubereitung von Aufgussgetränken mit Rückhaltevolumen (1) für nichtlösliche Aufgussbestandteile, bestehend aus einem Gefäßkörper mit einem als schiefe Ebene (2) ausgebildeten Boden, welche am Fußpunkt in das Rückhaltevolumen (1) übergeht,
**dadurch gekennzeichnet, dass**
das Rückhaltevolumen als Reservoirraum (12) ausgeführt ist, welcher einen ebenen, unterhalb der schiefen Ebene (2) verlaufenden Bodenabschnitt (13), einen zur schiefen Ebene (2) gerichteten Verbindungsabschnitt (14) und einen bauchigen, dem Verbindungsabschnitt (14) gegenüberliegenden, beim Ausgieß- oder Trinkvorgang wirksamen Rückhalteabschnitt (15) aufweist derart, dass der Aufguss-Flüssigkeitsspiegel gehindert ist, unter das Niveau der nichtlöslichen Aufgussbestandteile abzusinken.

2. Gefäß nach Anspruch 1,
**dadurch gekennzeichnet, dass**
dieses einen tüllenartigen Ausguss (11) besitzt, welcher oberhalb des Reservoirraums (12) am oberen Rand (16) des Gefäßkörpers ausgebildet ist, wobei sich zwischen dem Rückhalteabschnitt (15) und dem Ausguss (11) ein Rücksprung (17) befindet, der in ein Trichtersegment (18) übergeht, um ein strömungsbedingtes Aufwirbeln von im Reservoirraum (12) befindlichen Aufgussbestandteilen zu unterdrücken.

3. Gefäß nach Anspruch 1 oder 2,
**dadurch gekennzeichnet, dass**
oberhalb des Reservoirraums (12) der Gefäßkörper kaskadenartige Vor- und Rücksprünge (5) aufweist.

4. Gefäß nach einem der vorangegangenen Ansprüche,
**dadurch gekennzeichnet, dass**
der Gefäßkörper eine zylindrische, teilzylindrische oder ovale Form besitzt.

5. Gefäß nach einem der vorangegangenen Ansprüche,
**dadurch gekennzeichnet, dass**
die schiefe Ebene (2) als Brühfläche ausgeführt ist.

6. Gefäß nach einem der vorangegangenen Ansprüche,
**dadurch gekennzeichnet,**
**dass** dieses als Trinktasse oder Brühkanne ausgebildet ist.

## Claims

1. A vessel (10) for the preparation of infusion beverages with a retaining volume (1) for insoluble infusion constituents, consisting of a vessel body with a bottom which is formed as an inclined plane (2) and converges at the base point into the retaining volume (1), **characterized in that** the retaining volume is formed as a reservoir space (12) which comprises a flat bottom section (13) extending beneath the inclined plane (2), a connecting section (14) directed towards the inclined plane (2), and, opposite the connecting section (14), a bulbous retaining section (15) which is effective during the pouring-out or drinking process in such a way that the infusion liquid level is prevented from dropping below the level of the insoluble infusion constituents.

2. A vessel according to claim 1, **characterized in that** it comprises a spout-shaped outlet (11) which is formed above the reservoir space (12) at the upper edge (16) of the vessel body, wherein a recess (17) is disposed between the retaining section (15) and the outlet (11), said recess converging into a funnel segment (18) in order to suppress flow-induced swirling of infusion constituents situated in the reservoir space (12).

3. A vessel according to claim 1 or 2, **characterized in that** the vessel body comprises cascade-shaped projections and recesses (5) above the reservoir space (12).

4. A vessel according to one of the preceding claims, **characterized in that** the vessel body has a cylindrical, partly cylindrical or oval shape.

5. A vessel according to one of the preceding claims, **characterized in that** the inclined plane (2) is formed as a brewing surface.

6. A vessel according to one of the preceding claims, **characterized in that** it is formed as a drinking cup or brewing pot.

## Revendications

1. Récipient (10) pour la préparation de boissons infusées, comportant un volume de retenue (1) pour des composantes d'infusion non solubles, constitué par un corps de récipient pourvu d'un fond réalisé sous forme de plan oblique (2) qui se transforme en le volume de retenue (1) au point de pied,
**caractérisé en ce que**
le volume de retenue est réalisé sous forme d'espace réservoir (12) qui comprend une portion de fond (13) plane s'étendant au-dessous du plan oblique (2), une portion de liaison (14) dirigée vers le plan oblique (2) et une portion de retenue (15) bombée opposée à la portion de liaison (14) et agissant lors de l'opération de déversement ou lorsqu'on boit, de telle sorte que le niveau de liquide d'infusion est empêché de baisser au-dessous du niveau des composantes d'infusion non solubles.

2. Récipient selon la revendication 1,
**caractérisé en ce que**
celui-ci comprend un déversoir (11) en forme de bec qui est réalisé au-dessus de l'espace réservoir (12) au bord supérieur (16) du corps de récipient, un ressaut (17) étant situé entre la portion de retenue (15) et le déversoir (11), qui se transforme en un segment formant entonnoir (18) pour supprimer un tourbillonnement dû à l'écoulement des composantes d'infusion situées dans l'espace réservoir (12).

3. Récipient selon la revendication 1 ou 2,
**caractérisé en ce que**
au-dessus de l'espace réservoir (12), le corps de récipient comprend des saillies et des ressauts (5) en forme de cascades.

4. Récipient selon l'une des revendications précédentes,
**caractérisé en ce que**
le corps de récipient possède une forme cylindrique, partiellement cylindrique ou ovale.

5. Récipient selon l'une des revendications précédentes,
**caractérisé en ce que**
le plan oblique (2) est réalisé sous forme de surface d'infusion.

6. Récipient selon l'une des revendications précédentes,
**caractérisé en ce que**
celui-ci est réalisé sous forme de tasse à boire ou de pichet d'infusion.
